Europäisches Patentamt

European Patent Office

Office européen des brevets

(11) Veröffentlichungsnummer: **0 513 424 B1**

(12) **EUROPÄISCHE PATENTSCHRIFT**

(45) Veröffentlichungstag der Patentschrift: **25.10.95**

(51) Int. Cl.6: **F16H 59/08**

(21) Anmeldenummer: **91108043.0**

(22) Anmeldetag: **17.05.91**

(54) **Kraftfahrzeug-Getriebe mit einem Steuergerät.**

(43) Veröffentlichungstag der Anmeldung:
**19.11.92 Patentblatt 92/47**

(45) Bekanntmachung des Hinweises auf die
Patenterteilung:
**25.10.95 Patentblatt 95/43**

(84) Benannte Vertragsstaaten:
**DE FR GB IT**

(56) Entgegenhaltungen:

EP-A- 0 271 617      DE-A- 3 144 845
DE-A- 3 318 410      DE-A- 3 341 652
DE-A- 3 832 969      DE-A- 3 832 971
DE-A- 3 933 295

PATENT ABSTRACTS OF JAPAN, vol. 12, no.
428 (M-762)(3275), 11. November 1988 & JP-
A-63 162 344 (FUJITSU LTD) 5. Juli 1988

SAE Technical Paper Series 901760: Petersmann, J.; Seidel, W.; Möllers, W.: "Porsche
Carrera 2 Tiptronic Transmission". Reprinted
from SP-837 - Dynamic Characteristics of
Today's Passenger Car Transmissions; Pages 11-24; SAE International, 400 Commonwealth Drive, Warrendale, PA 15096-0001
(US).

(73) Patentinhaber: **SIEMENS AKTIENGESELL-
SCHAFT
Wittelsbacherplatz 2
D-80333 München (DE)**

(72) Erfinder: **Graf, Friedrich, Dipl.-Ing., (FH)
Amselweg 5
W-8400 Regensburg (DE)**

EP 0 513 424 B1

## Beschreibung

Die Erfindung betrifft ein Kraftfahrzeug-Getriebe nach dem Oberbegriff von Anspruch 1.

Ein derartiges Getriebe ist aus dem SAE-Paper 901760 bekannt. Es ist mit einem Steuergerät versehen, das in einer ersten Betriebsart die Gangschaltungen automatisch ausführt. Zusätzlich kann das Getriebe in einer zweiten Betriebsart durch den Fahrer von Hand geschaltet werden. Das Steuergerät wertet den Fahrzustand des Kraftfahrzeugs aus, wobei es Signale über die Drosselklappenstellung, die Motordrehzahl, die Fahrgeschwindigkeit, die Querbeschleunigung und die Längsbeschleunigung des Kraftfahrzeugs empfängt. Aus diesen Signalen wird durch Filterung, Mittelwertbildung und Wichtung ein sogenannter Modulationsfaktor berechnet, der dazu dient, eines von fünf verschiedenen Schaltkennfeldern auszuwählen, das der jeweiligen Fahrsituation angemessen ist. Die Auswertung des Fahrzustands erfolgt dabei laufend und unabhängig von der jeweiligen Betriebsart, der Fahrer hat auf die Auswertung keinen Einfluß.

Andere bekannte Steuergeräte für automatische Getriebe sind für mindestens zwei Schaltcharakteristiken oder Betriebsarten ausgelegt, die z.B. jeweils in einem Kennfeld festgelegt sind: "sportlich" und "kraftstoffsparend". Zwischen den beiden Betriebsarten wird manuell oder automatisch umgeschaltet (DE-A-38 32 971; DE-A-33 41 652, DE-A-31 44 845). Es hat sich aber gezeigt, daß häufig die fest vorgegebenen Betriebsarten dem Fahrer nicht ganz zusagen, und daß auch die automatische Umschaltung zwischen beiden nicht ganz seinem Fahrverhalten entspricht. Er neigt dann dazu, von Hand in die Schaltvorgänge einzugreifen.

Mit einer bekannten Einrichtung zum Bestimmen von "Regelcharakteristiken" für Kraftfahrzeuge soll die Reaktion verschiedener Steuergeräte im Kraftfahrzeug - z.B. für die eingespritzte Kraftstoffmenge, den Drosselklappenwinkel oder die Schaltkennlinien eines automatischen Getriebes jeweils in Abhängigkeit von der Betätigung des Gaspedals, oder das Radlenkmoment einer Servolenkung in Abhängigkeit von dem am Lenkrad aufgebrachten Drehmoment - durch den Fahrer nach seinen Bedürfnissen oder Wünschen verändert werden können (DE-A-39 33 295). Der Fahrer gibt einen Korrekturfaktor (als "Charakteristik" oder auch als "Fahrercharakteristik" bezeichnet), mit dem die Betätigung des Bedienungsorgans verändert wird, in einen Speicher ein. Dieser Faktor wird von dem Steuergerät dann berücksichtigt, evtl. nach einer Überprüfung, ob die Änderung einem gesetzlich zulässigen Bereich (z.B. den Abgasvorschriften) entspricht. Der Fahrer muß den Korrekturfaktor von Hand mit einem speziellen, nicht mit den üblichen Bedienorganen des Kraftfahrzeugs identischen Eingabemedium, z.B. mit einem Schieber (Schalt- oder Volumenknopf), einstellen und dann die Abspeicherung durch Betätigen eines "Überführungsknopfes" bewirken. Die Änderung wirkt sich global auf das jeweilige Steuergerät aus. Sie soll vom Fahrer während des Fahrens durchgeführt werden können, wobei er teilweise im menügesteuerten Dialogverfahren vorzugehen hat.

Der Erfindung liegt die Aufgabe zugrunde, ein automatisches Kraftfahrzeuggetriebe zu schaffen, dessen Schaltverhalten in einfacher Weise den Fahrgewohnheiten und Wünschen des Fahrers angepaßt werden kann.

Erfindungsgemäß wird diese Aufgabe durch ein Steuergerät nach Anspruch 1 gelöst.

Vorteilhafte Weiterbildungen der Erfindungen sind den Unteransprüchen zu entnehmen.

Durch die Erfindung wird die Getriebesteuerung "lernfähig". Auf einen Befehl des Fahrers werden die seiner Fahrweise entsprechenden Schaltpunkte in einem besonderen Schaltkennfeld o.ä. abgelegt und können dann auf Wunsch abgerufen werden. Das heißt, dem Fahrer wird eine Schaltcharakteristik zur Verfügung gestellt, die genau seinem Fahrverhalten entspricht. Bei der Abspeicherung wird zusätzlich dafür gesorgt, daß nicht zulässige Schaltpunkte, z.B. ein Rückschalten bei zu hoher Drehzahl, nicht berücksichtigt werden.

Ein Ausführungsbeispiel der Erfindung wird im folgenden anhand der Zeichnung erläutert, es zeigen:

Figur 1        ein Schaltbild eines mit einem erfindungsgemäßen Steuergerät versehenen Kraftfahrzeug-Antriebes,

Figuren 2-4    verschiedene zur Erläuterung der Erfindung dienende Kennlinienfelder,

Figur 5        ein Flußdiagramm,aus dem die Funktion des Steuergeräts nach Figur 1 beim abspeichern einer Hochschaltung ersichtlich ist, und

Figur 6        ein entsprechendes Flußdiagramm für das abspeichern einer Rückschaltung.

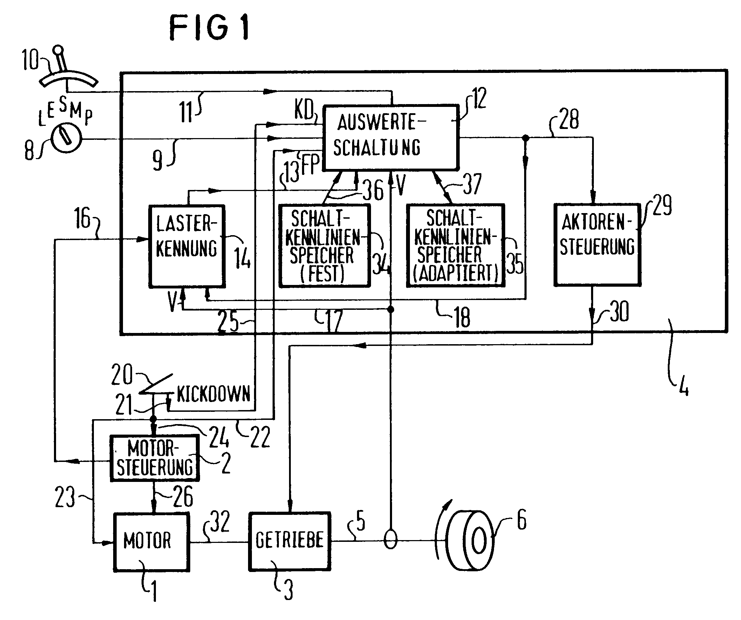

Der Antrieb eines Kraftfahrzeuges besteht im wesentlichen aus einem Motor 1, einer Motorsteuerung 2, einem Getriebe 3 und einer Getriebesteuerung 4 (Figur 1). Das an der Getriebeausgangswelle 5 abgegebene Antriebsmoment wird auf die Räder 6 des Kraftfahrzeugs übertragen. In der stark vereinfachten Figur 1 sind dabei die Zwischenglieder, z.B. Kardanwelle, Differential und Achswellen, nicht dargestellt. Die Schaltcharakteristik der Getriebesteuerung 4 kann von dem Fahrer über einen Wählschalter beeinflusst werden, der folgende Stellungen aufweist: E = "Economy" oder kraftstoffsparender Betrieb, S = sportlicher Betrieb, P = adaptierter Schaltmodus, M = manuelle Gangschaltung und außerdem L = Lernen. In der Stellung M wird das Getriebe nicht automatisch durch die Getriebesteuerung, sondern durch den Fahrer von Hand über einen manuellen Gangwahlschalter geschaltet.

Die Information über die vom Fahrer gewählte Stellung des Wählschalters 8, d.h. die gewünschte Betriebsart, und gegebenenfalls die Information über den vom Fahrer an dem manuellen Gangwahlschalter 10 gewählten Gang gelangen über Leitungen 9 bzw. 11 zu einer Auswerteschaltung in Form einer Schaltpunktgewinnungs und -gangberechnungs-Einheit 12, z.B. einem programmgesteuerten Rechner. Die Einheit 12 ist über eine Leitung 13 auch mit einer Lasterkennungsschaltung 14 verbunden, die ihr eine Information über eine besondere Lastsituation, z.B. eine Bergfahrt, liefert.

Die Lasterkennungsschaltung 12 weist drei Eingänge auf, an denen sie folgende Informationen erhält: über eine Leitung 16 von der Motorsteuerung 2 eine die Motorleistung kennzeichnende Größen, z.B. das erzeugte Drehmoment und die Motordrehzahl; über eine Leitung 17 die Geschwindigkeit v oder die zu ihr proportionale Drehzahl der Getriebeantriebswelle 5, und über eine Leitung 18 den jeweils eingelegten Gang.

Ein Fahr- oder Gaspedal 20 weißt einen Kick-Down-Schalter 21 auf. Es ist über eine Leitung 22 mit der Einheit 12 und über Leitungen 23 und 24 mit dem Motor 1 bzw. der Motorsteuerung 2 verbunden. Die Betätigung des Kick-Down-Schalters 21 wird über eine Leitung 25 an die Einheit 12 gemeldet. Die Steuerungssignale der Motorsteuerung 2 gelangen über eine Leitung 26 zu dem Motor 1.

Der in der Einheit 12 auf Grund der empfangenen Informationen ermittelte Gang wird über eine Leitung 28 an eine Aktoren - steuerung 29 gemeldet, die ihrerseits entsprechende Aktorsignale über eine Leitung 30 an das Getriebe 3 übermittelt. Mit den Aktorsignalen werden Stellglieder oder Aktoren in dem Getriebe 3 gesteuert. Es sind dies z.B. Hydraulikventile, mit denen in dem Getriebe Kupplungen und Bremsen betätigt werden, um in den ermittelten Gang zu schalten. Das Getriebe 3 empfängt außerdem über eine Leitung 32 eine Information über die jeweilige Motordrehzahl.

Die Schaltpunkte, bei denen von einem Gang in einen anderen Gang geschaltet wird, werden von der Einheit 12 mit Hilfe von Schaltkennlinien ermittelt, die in einem ersten Schaltkennlinien-Speicher 34 und in einem zweiten Schaltkenlinien - Speicher 35 abgelegt sind. Der Speicher 34 enthält die Daten von fest vorgegebenen Schaltkennlinien, in dem Speicher 35 werden erfindungsgemäß adaptierte oder "gelernte" Schaltkenlinien-Daten abgespeichert. Die Daten in dem Speicher 34 werden von der Einheit 12 über eine Leitung 36 abgefragt, in den Speicher 35 hingegen schreibt die Einheit 12 über eine Leitung 37 Schaltpunktdaten ein und liest sie danach bei Bedarf wieder aus.

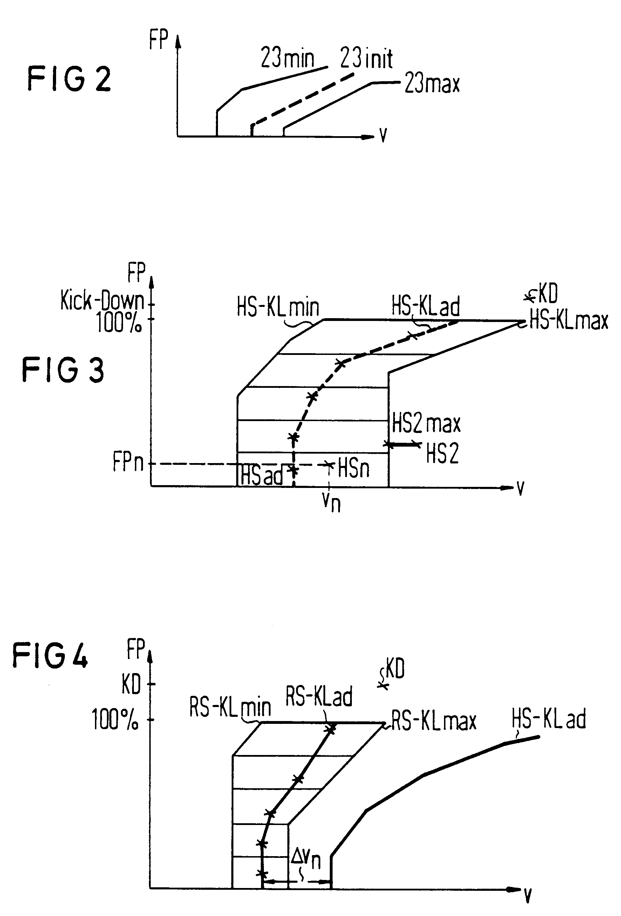

Grafisch dargestellt werden Schaltkennlinien in einem Diagramm (Figur 2), in dem die Fahrzeuggeschwindigkeit v auf der Abszisse und die Fahrpedalstellung FP auf der Ordinate aufgetragen sind. Eine gestrichelt dargestellte Schaltlinie 23init stellt Schaltpunkte zu Verfügung, wenn der Speicher 35 zum ersten mal abgefragt wird, d.h. bevor fahrermodifizierte Schaltlinien gespeichert worden sind. Die Linie 23init kann z.B. eine S-Schaltlinie sein, d.h. eine Schaltlinie für sportliches Fahren, die in dem Speicher 34 abgelegt ist, und zwar für das Hochschalten von dem zweiten in den dritten Gang.

Wählt nun der Fahrer die Betriebsart, den L-Modus, in dem die manuell durchgeführten Schaltungen "gelernt" werden, so geschieht das Lernen wie nachfolgend beschrieben. Unzulässige Schaltungen, insbesondere Rückschaltungen, werden aber im L-Modus selbstätig ausgeschieden und damit z.B. ein Überdrehen des Motors verhindert. Der für eine Hochschaltung von dem zweiten in den dritten Gang zulässige Schaltpunktbereich wird durch zwei Kennlinien 23min und 23max begrenzt.

Anhand von Figur 3 wird nun das Berechnen von fahrermodifizierten Schaltpunkten erläutert:
Die Absicherungskennlinen für das Hochschalten sind hier mit HS-KL,min und HS-KL,max bezeichnet. Der Raum zwischen diesen beiden Kennlinien wird in vertikal übereinander liegende Abschnitte aufgeteilt, die in der Zeichnung durch waagrechte Linien dargestellt sind, und dabei wird jedem Abschnitt ein modifizierbarer Schalt-Stützpunkt zugeordnet. Damit kann die Anzahl der zum Festlegen einer Schaltkennlinie notwendigen Stützpunkte beschränkt werden. Die Abschnitte müssen nicht gleich groß sein; man kann kleinere Abschnitte und eine daraus sich ergebende höhere Stützpunktdichte in Bereiche legen, in denen häufiger Schaltungen stattfinden.

Löst nun der im Fahrer L-Modus eine Hochschaltung aus, so liegt ein neuer Schaltpunkt HSn mit den Koordinaten vn, FPn vor. Die vorhandene, bereits gelernte oder adaptierte Schaltkenlinie sei HS-KL,ad. Liegt der neue Schaltpunkt HSn um mehr als einen vorgegeben Abstand von HS-KL,ad entfernt, so werden seine Koordinaten folgender-maßen berechnet:

$$FPad,NEU = FPad,ALT + (FPn - FPad, ALT)/K$$
$$vad,NEU = vad,ALT + (vn - vad, ALT)/K$$

Wobei k > = 1 ist.

Diese Berechnung bewirkt ein filterndes Verhalten, k hat dabei die Funktion einer Zeitkonstante. Bevor dieses neue adaptierte Wertepaar als HSad,neu abgespeichert wird, wird anhand der Absicherungskennlinien noch geprüft, ob eine Bereichsüberschreitung vorliegt. Ist dies der Fall, so wird für die Abszisse v der Wert aus der Absicherungskennlinie entnommen: HS2 max.

In folgenden Fällen werden die neu berechneten Werte nicht abgespeichert:

- Wird während einer Bergfahrt oder allgemein unter veränderten Lastbedingungen geschaltet, dann werden die vom Fahrer vorgegebenen Schaltpunkte nicht berücksichtigt. Es liegt ein zeitlich begrenztes, stark verändertes Schaltverhalten des Fahrers vor, das zu einer unerwünschten Veränderung der bereits abgespeicherten Schaltlinien führen würde. Erkannt wird dieses Lastzustand durch die Lasterkennungsschaltung 14, die gegebenenfalls über die Leitung 13 an die Einheit 12 ein Signal abgibt, das die Abspeicherung unterdrückt.

- Der Kick-Down-Schaltpunkt KD ist ein fester Punkt und kann nicht verschoben werden.

- Zweckmäßigerweise wird ein gewisser Mindestabstand zur folgenden wirksamen Hochschaltlinie - bei der Schaltkennlinie 23 ist es der Abstand zur Schaltkennlinie 34 - vorgegeben, um ein insgesamt ausgewogenes Schaltverhalten des Getriebes zu erhalten. Die Prüfung und Korrektur erfolgt analog wie anhand der Absicherungskennlinie HS-KL,max vorstehend beschrieben, d.h., wenn der neue Schaltpunkt zu nahe an der darüber liegenden Schaltkennlinie liegt, wird ein Schaltpunkt mit dem Mindestabstand abgespeichert.

Das Abspeichern von Schaltpunkten bei Rückschaltungen wird anhand von Figur 4 erläutert. Eine an den Fahrer adaptierte Rückschaltkennlinie RS-KL,ad wird festgelegt, indem eine vorgegebene Anzahl von Stützpunkten, wie anhand von Figur 3 für die Hochschaltkennlinien, beschrieben ermittelt und abgespeichert werden. Zusätzlich muß aber für eine Schalthysterese gesorgt werden, indem ein vorgegebener Mindestabstand $\Delta$vh zur adaptierten Hochschaltkennlinie HS-KLad eingehalten wird. Diese Hysterese verhindert ein hektisches Hoch - und Rückschalten bei geringfügigen Änderungen des Fahrzustandes. Der Mindestabstand vh muß zwischen den sich entsprechenden Hochschalt- und Rückschaltkennlinien eingehalten werden, z.B. zwischen der Rückschaltkennlinie 43 und der Hochschaltkennlinie 34. Es müssen somit Mindestabstände sowohl unter den einzelnen Hochschalt- und den einzelnen Rückschalt-Kennlinien, als auch zwischen jeder Rückschaltkennlinie und der entsprechenden Hochschaltlinie eingehalten werden.

Die wie vorstehend beschrieben ermittelten und in dem Speicher 35 (Figur 1) abgespeicherten Schaltkennlinien stehen dem Fahrer nun als eigenes Schaltprogramm zur Verfügung, das er jederzeit über einen Schalter oder über eine zusätzliche Stellung des Wählschalters 8 aktivieren kann. Das Getriebe 3 steuert dann bei Schaltpunkten, die genau dem Fahrstil des Fahrers entsprechen. Auch in diesem Fahrprogramm wird allerdings - wie bereits erläutert - unter besonderen Lastzuständen, wie beim Befahren von Steigungen, nach fest vorgegebenen, vom Fahrer nicht beeinflußten Schaltkennlinien automatisch geschaltet.

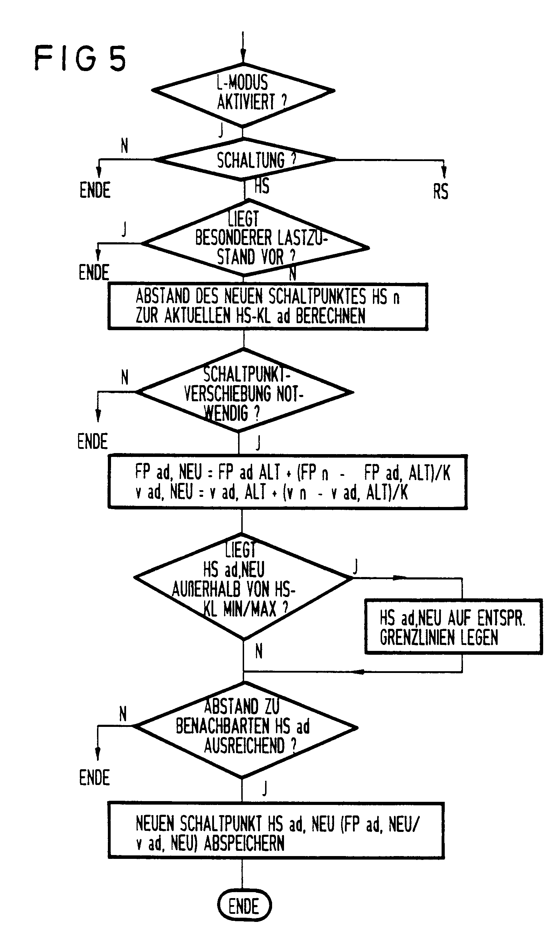

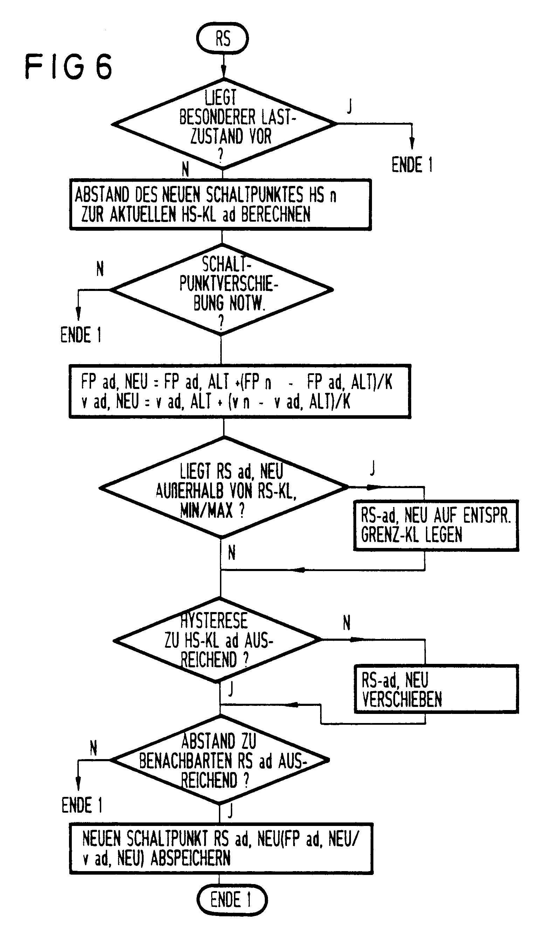

Die Arbeitsweise der Getriebesteuerung 4 in dem L-Modus bei einer Hochschaltung ist in Figur 5 anhand eines Ablaufdiagramms in einzelnen erläutert. In Figur 6 ist ihre Arbeitsweise bei einer Rückschaltung ebenfalls anhand eines Ablaufdiagramms erläutert.

**Patentansprüche**

1. Kraftfahrzeug-Getriebe (3) mit einem Steuergerät, durch das die Schaltpunkte des Getriebes in einer Betriebsart für automatische Gangschaltung (ES) anhand von in Schaltkennfeldern (34) abgelegten Schaltkennlinien ermittelt werden, und das mit einer Auswerteschaltung (12) versehen ist, durch die das Fahrverhalten des Fahrers registriert und beim Ermitteln der Schaltpunkte des Getriebes berücksichtigt wird; - wobei das Getriebe (3) ferner über eine Betriebsart für manuelle Gangschaltung (M) verfügt, in der die Steuerung der Gangwahl des Getriebes (3) durch den Fahrer von Hand über einen manuellen Gangwahlschalter (10) erfolgt,
   **dadurch gekennzeichnet,**
   - daß das Getriebe eine von dem Fahrer auslösbare Betriebsart Lernen (L) aufweist, in der die von dem Fahrer manuell gewählten Schaltpunkte (HSn) erfaßt und als dauerhaft zu speichernde Stützpunkte für adaptierte Schaltkennlinien herangezogen werden, die in einer Betriebsart für adaptierte Gangschaltung (P) als eigenes Schaltprogramm auf Wunsch abrufbar sind.

2. Kraftfahrzeug-Getriebe (3) nach Anspruch 1, dadurch gekennzeichnet, daß untere und obere Grenzwerte (HS-KL,min; HS-KL,max) vorgegeben sind, und daß die manuell gewählten Schaltpunkte nicht gespeichert werden, wenn sie unter bzw. über diesen Grenzwerten liegen.

**3.** Kraftfahrzeug-Getriebe (3) nach Anspruch 1, dadurch gekennzeichnet, daß es mit einer Lasterkennungsschaltung (14) versehen ist, durch die das Speichern der von dem Fahrer manuell gewählten Schaltpunkte unter besonderen Lastzuständen verhindert wird.

**Claims**

**1.** Motor vehicle transmission (3) with a control device by means of which the shift points of the transmission in a mode of operation for automatic gear change (ES) are determined with reference to characteristic shift curves stored in characteristic shift diagrams (34), and which is provided with an evaluation circuit (12) by means of which the driving behaviour of the driver is recorded and is taken into account when the shift points of the transmission are determined;

- the transmission (3) also having a mode of operation for manual gear change (M) in which the control of the selection of the gear of the transmission (3) is made manually by the driver by means of a manual gear selector (10), characterized

- in that the transmission has a learning (L) mode of operation which can be triggered by the driver and in which the shift points (HSn) which are manually selected by the driver are detected and are used as points of reference, to be stored permanently, for adapted characteristic shift curves which can be called up as desired in a mode of operation for adapted gear change (P) as a separate gear-shift program.

**2.** Motor vehicle transmission (3) according to Claim 1, characterized in that the lower and upper limit values (HS-KL, min; HS-KL, max) are prescribed, and in that the manually selected shift points are not stored if they lie below or above these limit values.

**3.** Motor vehicle transmission (3) according to Claim 1, characterized in that it is provided with a load-detection circuit (14) by means of which the shift points which have been manually selected by the driver under special load conditions are prevented from being stored.

**Revendications**

**1.** Boîte de vitesses (3) de véhicule automobile comportant un dispositif de commande, par lequel les points d'enclenchement de la boîte de vitesses, dans un mode de fonctionnement à changement de vitesses automatique (ES), sont déterminés, au moyen de courbes caractéristiques de changement déterminées dans des diagrammes caractéristiques de changement de vitesses (34), par un circuit logique d'exploitation (12), par lequel le comportement du conducteur est enregistré et est pris en considération pour la détermination des points de changement de rapport de la boîte de vitesses;

- étant entendu que la boîte de vitesses (3) présente, de plus, un mode de fonctionnement à passage manuel des vitesses (M) dans lequel la commande du choix des rapports de la boîte de vitesses (3) par le conducteur se fait manuellement, par l'intermédiaire d'un sélecteur de vitesses (10),

caractérisé en ce que

la boîte de vitesses (3) présente un mode de fonctionnement "Apprentissage" (L), déclenchable par le conducteur, dans lequel les points de changement de rapport (HSn) sont enclenchés manuellement par le conducteur et sont déterminés sous la forme de points de référence à mettre en mémoire durablement pour créer des courbes caractéristiques adaptées auxquelles, dans un mode de fonctionnement pour un changement de vitesses (P) adapté, on puisse faire appel, à volonté, sous la forme d'un programme approprié de changement des rapports.

**2.** Boîte de vitesses (3) de véhicule automobile suivant la revendication 1, caractérisée en ce que des valeurs limites inférieures et supérieures (HS-KL,min; HS-KL,max) sont définies à l'avance, interdisant la mise en mémoire des points de changement de rapport choisis manuellement par le conducteur, s'ils se trouvent respectivement en-dessous ou en-dessus de ces valeurs limites.

**3.** Boîte de vitesses (3) de véhicule automobile suivant la revendication 1, caractérisée en ce qu'il est prévu un circuit (14) de reconnaissance de la charge, interdisant, dans certaines conditions de charge, la mise en mémoire des points de changement de rapport choisis manuellement par le conducteur.

# FIG 1

EP 0 513 424 B1

EP 0 513 424 B1

FIG 2

FP

23min  23init
23max

v

FIG 3

FP
Kick-Down
100%

HS-KLmin      HS-KLad        KD
HS-KLmax

HS2max
HS2

FPn
HSad    HSn

v_n

v

FIG 4

FP
KD
100%

RS-KLmin  RS-KLad
KD
RS-KLmax    HS-KLad

Δv_n

v

7

EP 0 513 424 B1

FIG 5

L-MODUS
AKTIVIERT ?

J

N ← SCHALTUNG ? → RS

ENDE HS

LIEGT
BESONDERER LASTZU-
STAND VOR ?

J

ENDE N

ABSTAND DES NEUEN SCHALTPUNKTES HS n
ZUR AKTUELLEN HS-KL ad BERECHNEN

SCHALTPUNKT-
VERSCHIEBUNG NOT-
WENDIG ?

N

ENDE J

FP ad, NEU = FP ad ALT + (FP n - FP ad, ALT)/K
v ad, NEU = v ad, ALT + (v n - v ad, ALT)/K

LIEGT
HS ad,NEU
AUßERHALB VON HS-
KL MIN/MAX ?

J →

HS ad,NEU AUF ENTSPR.
GRENZLINIEN LEGEN

N

ABSTAND ZU
BENACHBARTEN HS ad
AUSREICHEND ?

N

ENDE J

NEUEN SCHALTPUNKT HS ad, NEU (FP ad, NEU/
v ad, NEU) ABSPEICHERN

ENDE

8

# FIG 6

RS

LIEGT
BESONDERER LAST-
ZUSTAND VOR
?

J → ENDE 1

N

ABSTAND DES NEUEN SCHALTPUNKTES HS n
ZUR AKTUELLEN HS-KL ad BERECHNEN

SCHALT-
PUNKTVERSCHIE-
BUNG NOTW.
?

N → ENDE 1

$$FP\ ad,\ NEU = FP\ ad,\ ALT + (FP\ n - FP\ ad,\ ALT)/K$$
$$v\ ad,\ NEU = v\ ad,\ ALT + (v\ n - v\ ad,\ ALT)/K$$

LIEGT RS ad, NEU
AUßERHALB VON RS-KL,
MIN/MAX ?

J → RS-ad, NEU AUF ENTSPR.
GRENZ-KL LEGEN

N

HYSTERESE
ZU HS-KL ad AUS-
REICHEND ?

N → RS-ad, NEU
VERSCHIEBEN

J

ABSTAND ZU
BENACHBARTEN RS ad AUS-
REICHEND ?

N → ENDE 1

J

NEUEN SCHALTPUNKT RS ad, NEU(FP ad, NEU/
v ad, NEU) ABSPEICHERN

ENDE 1